# EUROPEAN PATENT APPLICATION

(11) **EP 4 046 736 A1**
(43) Date of publication of application: **24.08.2022**
(21) Application number: 21020086.1
(22) Date of filing: 22.02.2021
(51) Int. Cl.: B23K 9/04, B23K 9/16, B23K 9/32

(54) **DEVICE AND METHOD FOR DIRECT ENERGY DEPOSITION ADDITIVE MANUFACTURING (DED)**

(71) Applicant: Linde GmbH, 82049 Pullach (DE)
(72) Inventor: Hibbitt, Ian, Hulland, Derbyshire DE6 3 FJ (GB); Coroado, Julio, Finedon, Wellingborough NN9 5EN (GB)
(74) Representative: Gellner, Bernd

(57) **Abstract**

The present invention relates to a device and a method for DED or WAAM, comprising a welding torch (1) configured to generate an arc for generating a melt pool on a surface of a workpiece (2), and a wire feeder configured to feed a wire towards the melt pool to generate a weld seam on said surface, and an enclosure (4) enclosing at least part of the workpiece (2) and comprising a process atmosphere with a process gas, wherein a sucking device (5) sucks in part of the process gas and thereafter re-introduces the process gas into the process atmosphere.

## Description

The present invention relates to a device for direct energy deposition (DED) additive manufacturing, in particular for wire-arc additive manufacturing (WAAM), and to a corresponding method for DED, in particular WAAM.

Direct Energy Deposition Additive Manufacturing is a process wherein material is added with simultaneous heat input. Wire Arc Additive Manufacturing (WAAM) is a particular DED method of 3d printing that relies on the deposition of metal from a wire feed device that is subsequently melted within an electric arc discharge. WAAM processes can be conducted by applying a metallic material layer by layer using e.g. established inert gas metal arc welding processes, resulting in a desired 3D structure.

The high heat input during the DED or WAAM process creates a long waiting time between two layers and a limited deposition rate. The heat input needs to be precise in order to achieve a desired weld width and height. Excessive heat input leads to low weld height and large width, creating difficulties to generate the required shape of the component. Furthermore, with increasing numbers of weld seams on top of each other a lot of heat is generated in the already produced section. This can cause instabilities in the weld process or the desired contour cannot be created without waiting until the structure is cooled down.

As a second problem, DED or WAAM produces a lot of soot and smoke, that can be deposited on the weld seams. These residues may influence mechanical properties of the workpiece when they are melted into the next weld seam layer and may also influence the weld process e.g. the weld stability.

Thus, the problem to be solved by the present invention is to provide a device and a method for DED or WAAM that reduce the above-stated difficulties.

This problem is solved by a device for direct energy deposition additive manufacturing, in particular wire-arc additive manufacturing, comprising a welding torch configured to generate an arc for generating a melt pool on a surface of a workpiece, and a wire feeder configured to feed a wire towards the melt pool to generate a weld seam on said surface, and an enclosure enclosing at least part of the workpiece and comprising a process atmosphere with a process gas, which is characterized in that a sucking device is provided wherein the sucking device sucks part of the process gas out of the process atmosphere and thereafter re-introduces the process gas into the process atmosphere.

The invention also relates to a method for direct energy deposition additive manufacturing, in particular for wire-arc additive manufacturing, of a workpiece layer by layer, wherein a melt pool is generated on a surface of the workpiece to be formed and a metal wire is fed towards the melt pool to generate a weld seam, wherein the melt pool is enclosed by an enclosure and a process atmosphere with a process gas is provided within the enclosure, and which is characterized in that part of the process gas is withdrawn from the process atmosphere and subsequently re-introduced into the process atmosphere.

Preferred embodiments of these aspects of the present invention are disclosed in the corresponding sub claims and are described below.

A Direct Energy Deposition (DED) method or a wire arc additive manufacturing (WAAM) process is carried out in a process atmosphere which is maintained within an enclosure. In such a process the gas within the enclosure heats up quickly due to the high heat input by the welding torch. According to the present invention, process gas within the enclosure is sucked in by a sucking device and blown towards the boundaries of the melt pool. Thereby, the heat exchange between the metal and the process gas will be considerably improved and the heat input from the welding torch during the arc-welding process will be transferred to the process gas. The waiting time between manufacturing of two successive layers can be reduced and the total deposition rate can be increased.

The process gas is blown towards the melt pool without disturbing the melt pool. This is preferably achieved by using a nozzle which is placed next to the welding torch. The process gas is sucked in from a location further away from the torch and returned to the process atmosphere through the nozzle to a location close to the welding point. Preferably, the process gas is withdrawn from the process atmosphere at a location where the gas movement is low and/or where the atmosphere is static.

Particularly, according to an embodiment of the present invention, the welding torch is connected via a connecting structure to the nozzle, wherein particularly the welding torch is moveable along the workpiece together with the nozzle (e.g. along the respective weld seam) to generate a further weld seam on top of the previous weld seam. The sucking device could be a pump, a compressor or a similar device.

According to a preferred embodiment the enclosure is or comprises a flexible or rigid housing or a tent. The material the enclosure is made of may comprise rubber, plastics, metals or another gastight, flexible material. The enclosure covers at least the welding spot and the melt pool where the metal is melted by the welding torch. Preferably, two or more upper layers of the work piece to be produced are within the enclosure or even the whole work piece is inside the enclosure.

In a DED or WAAM process the material properties of the produced work piece depend on the gas composition of the process atmosphere. In many cases the oxygen level of the process atmosphere must not exceed a certain level. Therefore, it is preferred to have an inert process atmosphere or at least an atmosphere with a pre-defined maximum oxygen concentration within the enclosure. The process atmosphere may comprise one or more of the inert gases argon, nitrogen and /or helium. For example, the process atmosphere can be pure argon, pure helium or pure nitrogen or an argon-nitrogen mixture, an argon-helium mixture, a helium-nitrogen mixture or a mixture of argon, helium and nitrogen.

It has been found that under certain conditions, for example when titanium alloys such Ti64 or Ti-6AI-4V, are welded, the DED or WAAM process produces a lot of soot and smoke, that not only blackens the observation window of the enclosure, but also clogs any sensors or measuring systems. Therefore, in a preferred embodiment the sucking device is connected to a cleaning unit for cleaning the process gas prior to re-introduction into the process atmosphere. Soot, smoke or any other impurities are removed from the process gas before it is returned to the process atmosphere. Such cleaning of the process gas may for example be carried out in a cyclone or a similar device. The cleaning unit is preferably placed upstream of the sucking unit in order to clean the process gas before it contaminates the sucking unit.

Tests have shown that the process gas within the enclosure is heated up very quickly due to the high heat input from the welding torch. Depending on the heat input, the size of the enclosure and the gas circulation within the enclosure the temperature inside the enclosure might increase to 80°C or even higher. Therefore, it is preferred to provide a heat exchanger for cooling the process gas prior to re-introducing it into the process atmosphere. The process gas is sucked from the process atmosphere, cooled down in the heat exchanger and then returned to the process atmosphere. The heat exchange process may be controlled to cool down the process gas in a controlled manner in order to achieve a pre-defined process gas temperature or temperature range.

DED or WAAM equipment often comprises a robotic system for 3-dimensional moving of the welding torch. When the welding torch is moved inside the enclosure there is a risk that such movement causes pressure changes within the enclosure and/or inflates or deflates the enclosure when a flexible enclosure, such as a tent, is used. In order to keep the pressure constant it is preferred to connect the sucking device to a buffer volume. The volume of the buffer can be chosen such that it is large enough to compensate typical pressure changes of the process atmosphere. According to another embodiment the buffer is provided with a device for pressure stabilization. Thus, the pressure of the process gas returned to the process atmosphere and the pressure of the process atmosphere itself will be kept constant.

Particularly, according to another embodiment, the nozzle is or can be tilted in a movement direction (i.e. the welding direction) of the welding torch or it can be tilted in a direction opposite the movement direction of the welding torch. Preferably, the nozzle is tilted in the direction opposite the movement direction. Particularly, this helps to avoid disturbances of the melt pool and of the arc welding process.

Preferably, in an embodiment, the nozzle is spaced apart from the welding torch by a distance that lies in the range from 10 mm to 200 mm, particularly in the range from 50 mm to 100 mm.

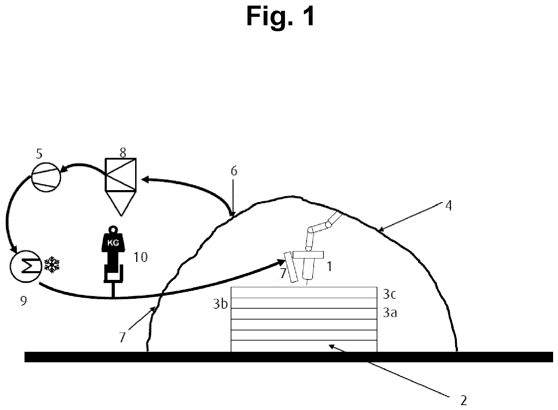

In the following, embodiments, further features, and advantages of the present invention shall be described with reference to the Figure, wherein
Fig. 1 shows a schematical illustration of an embodiment of a device according to the present invention.

Fig. 1 shows an embodiment of a device for wire-arc additive manufacturing (WAAM) of a work piece according to the present invention.

According to Fig. 1 the device comprises a welding torch 1 configured to generate an arc for generating a melt pool on a surface of a workpiece 2 to be formed. A wire feeder is connected to the welding torch 1 and is configured to feed a metallic wire towards the melt pool in order to generate a weld seam upon the surface of the work piece. The wire feeder can also be a part of the welding torch 1. The device is used to form the workpiece 2 by stacking weld seams 3a, 3b, 3c layer by layer on top of one another as shown in Fig. 1.

An enclosure 4 ,which can be a flexible tent made of rubber or a rigid container made of metal, covers the work piece 2. Within the enclosure 4 an inert process atmosphere is provided. The process atmosphere consists of an inert gas, in particular of argon, helium, nitrogen or a mixture of two or all three of these gases.

Close to the walls of the enclosure 4 the process atmosphere is quite static, that means there is no or only very small gas movement. Due to the reduced gas movement the heat transport within the enclosure 4 is low and the heat introduced by the welding torch 1 is only insufficiently taken away from the work piece 2.

Therefore, a pump or compressor 5 is provided wherein the inlet of the pump or compressor 5 is connected to a gas outlet port 6 of the enclosure 4. The outlet of the pump or compressor 5 is connected to a nozzle 7 located within the enclosure 4 and close to the welding torch 1. The pump or compressor 5 allows to suck process gas from the process atmosphere out of the enclosure 4 and to re-introduce the process gas via nozzle 7 at a point close to the melt pool.

It has been found that depending on the metal used and depending on the process conditions the WAAM process produces more or less soot and smoke. This soot and smoke may not only contaminate sensors and other equipment but also negatively affect the welding process. Therefore, the process gas recirculation circuit comprising the gas port 6, the pump or compressor 5 and the nozzle 7 and the connecting pipes further comprises a cleaning unit 8. The cleaning unit 8 is preferably placed upstream of the pump or compressor 5 so that the pump or compressor 5 is also protected from contamination. The cleaning unit 8 might be a filter or a cyclone in order to clean the process gas before it is re-entered into the enclosure 4.

The welding torch 1 introduces a considerable amount of energy and heat into the tent 4. This heat input heats up the process atmosphere in the enclosure 4 quickly. In order to cool down the process gas a cooling unit or a heat exchanger 9 is integrated into the process gas recirculation circuit. The cooling unit or heat exchanger 9 is preferably arranged downstream of the pump or compressor 5 to also absorb the compression heat generated by the pump or compressor 5.

Further, a weighted buffer volume 10 is provided in the process gas recycling circuit. When the welding torch 1 is moving in the enclosure 4 it causes pressure variations which negatively affect the welding process or even inflate or deflate the enclosure 4. The weighted buffer volume 10 ensures that always the same pressure is applied to the process gas so that any pressure variations, for example caused by the moving welding torch 1, will be compensated.

The present invention provides the following advantages. Process gas is extracted from an area in the enclosure 4 where only low gas movement exists. This process gas is recycled and re-introduced into the enclosure 4 at a location close to the welding torch 1 and to the melt pool where the welding torch 1 generates a lot of heat. The inventive gas recirculation circuit thereby considerably improves the convection within the enclosure 4. The workpiece 2 will cool down faster and the production speed can be increased.

In addition, the recirculated process gas is cooled down by a cooling unit 9 to even better compensate the heat input from the welding torch 1. Preferably, the cooling rate of the cooling unit 9 is controlled so that the temperature within the enclosure 4 is maintained essentially constant.

The recirculation of process gas is further used to clean the process gas from any soot, smoke or other impurities. This is preferably accomplished by passing the recirculated process gas through a cleaning unit, such as a cyclone 8 or a filter.

And last but not least, a buffer volume, and in particular a weighted buffer volume, or another pressure stabilizing unit keeps the pressure of the recirculated process gas at a pre-defined constant level.

## Claims

1. A device (1) for direct energy deposition additive manufacturing, in particular for wire-arc additive manufacturing, comprising:
- a welding torch (1) configured to generate an arc for generating a melt pool on a surface of a workpiece (2), and
- a wire feeder configured to feed a wire towards the melt pool to generate a weld seam on said surface, and
- an enclosure (4) enclosing at least part of the workpiece (2) and comprising a process atmosphere with a process gas,
**characterized in that**
a sucking device (5) is provided wherein the sucking device (5) sucks in part of the process gas and thereafter re-introduces the process gas into the process atmosphere.

2. Device according to claim 1, **characterized in that** a nozzle (7) is provided for re-introducing the gas into the process atmosphere wherein the nozzle (7) is placed next to the welding torch (1).

3. Device according to any of the preceding claims, **characterized in that** the enclosure (4) comprises or consists of a flexible or rigid housing or a tent.

4. Device according to any of the preceding claims, **characterized in that** the sucking device (5) is connected to a cleaning unit (8) for cleaning the process gas prior to re-introduction into the process atmosphere.

5. Device according to claim 4, **characterized in that** the cleaning unit (8) comprises a cyclone.

6. Device according to any of the preceding claims, **characterized in that** the sucking device (5) is connected to a heat exchanger or a cooling unit (9) for cooling the process gas prior to re-introduction into the process atmosphere.

7. Device according to any of the preceding claims, **characterized in that** the sucking device (5) is connected to a buffer volume or a pressure stabilizing unit (10).

8. Device according to any of the preceding claims, **characterized in that** the sucking device (5) comprises a pump or a compressor.

9. A method for direct energy deposition additive manufacturing, in particular wire-arc additive manufacturing, of a workpiece layer by layer (3a, 3b, 3c), wherein a melt pool is generated on a surface of the workpiece (2) to be formed and a metal wire is fed towards the melt pool to generate a weld seam, wherein the melt pool is enclosed by an enclosure and a process atmosphere with a process gas is provided within the enclosure,
**characterized in that**
part of the process gas is withdrawn from the process atmosphere and subsequently re-introduced into the process atmosphere.

10. Method according to claim 9, **characterized in that** the process gas is withdrawn from the process atmosphere and passed out of the enclosure.

11. Method according to any of claims 9 or 10, **characterized in that** the process atmosphere comprises argon, nitrogen and/or helium.

12. Method according to any of claims 9 to 11, **characterized in that** the process gas is cleaned and/or cooled prior to being re-introduced into the process atmosphere.
